# EUROPÄISCHE PATENTSCHRIFT

(11) **EP 3 356 191 B1**
(45) Veröffentlichungstag und Bekanntmachung des Hinweises auf die Patenterteilung: **08.01.2020**
(21) Anmeldenummer: 16767311.0
(22) Anmeldetag: 21.09.2016
(51) Int. Cl.: B60T 8/88, B60T 8/40

(54) **BREMSSYSTEM UND VERFAHREN ZUM BETREIBEN EINES BREMSSYSTEMS**
BRAKE SYSTEM AND METHOD FOR OPERATING A BRAKE SYSTEM
SYSTÈME DE FREINAGE ET PROCÉDÉ DE FONCTIONNEMENT D'UN SYSTÈME DE FREINAGE

(30) Priorität: 01.10.2015 DE 102015219001
(43) Veröffentlichungstag der Anmeldung: 08.08.2018
(73) Patentinhaber: Continental Teves AG & Co. OHG, 60488 Frankfurt am Main (DE)
(72) Erfinder: NIEPELT, Mathias, 61169 Friedberg (DE); HALBE, Iris, 35510 Butzbach (DE); WICKENHÖFER, Thorsten, 65719 Hofheim (DE); REVIOL, Ralf Richard, 63128 Dietzenbach-Steinberg (DE); BERGER, Klaus, 60437 Frankfurt (DE)
(86) Internationale Anmeldenummer: PCT/EP2016/072403
(87) Internationale Veröffentlichungsnummer: WO 2017/055152

(56) Entgegenhaltungen:
- WO-A1-2015/074935
- DE-A1-102012 201 820
- DE-A1-102012 210 434

## Beschreibung

Die Erfindung betrifft ein elektrohydraulisches Bremssystem gemäß dem Oberbegriff von Anspruch 1. Sie betrifft weiterhin ein Verfahren zum Betreiben eines elektrohydraulischen Bremssystems.

In der Kraftfahrzeugtechnik finden "Brake-by-Wire"-Bremsanlagen eine immer größere Verbreitung. Derartige Bremsanlagen umfassen oftmals neben einem durch den Fahrzeugführer betätigbaren Hauptbremszylinder eine elektrisch ("by-wire") ansteuerbare Druckbereitstellungseinrichtung, mittels welcher in der Betriebsart "Brake-by-Wire" eine Betätigung der Radbremsen stattfindet.

Bei diesen modernen Bremssystemen, insbesondere elektrohydraulischen Bremssystemen mit der Betriebsart "Brake-by-Wire", ist der Fahrer von dem direkten Zugriff auf die Bremsen entkoppelt. Bei Betätigung des Pedals werden gewöhnlich eine Pedalentkopplungseinheit und ein Simulator betätigt, wobei durch eine Sensorik der Bremswunsch des Fahrers erfasst wird. Der Pedalsimulator dient dazu, dem Fahrer ein möglichst vertrautes und komfortables Bremspedalgefühl zu vermitteln. Der erfasste Bremswunsch führt zu der Bestimmung eines Sollbremsmomentes, woraus dann der Sollbremsdruck für die Bremsen ermittelt wird. Der Bremsdruck wird dann aktiv von einer Druckbereitstellungseinrichtung in den Bremsen aufgebaut.

Das tatsächliche Bremsen erfolgt also in der "By-wire"-Betriebsart durch aktiven Druckaufbau in den Bremskreisen mit Hilfe einer Druckbereitstellungseinrichtung, die von einer Steuer- und Regeleinheit angesteuert wird. Durch die hydraulische Entkopplung der Bremspedalbetätigung von dem Druckaufbau lassen sich in derartigen Bremssystemen viele Funktionalitäten wie ABS, ESC, TCS, Hanganfahrhilfe etc. für den Fahrer komfortabel verwirklichen.

In derartigen Bremssystemen ist gewöhnlich eine hydraulische Rückfallebene vorgesehen, durch die der Fahrer durch Muskelkraft bei Betätigung des Bremspedals das Fahrzeug abbremsen bzw. zum Stehen bringen kann, wenn die "By-Wire"-Betriebsart ausfällt oder gestört ist. Während im Normalbetrieb, z.B. durch eine Pedalentkopplungseinheit, die oben beschriebene hydraulische Entkopplung zwischen Bremspedalbetätigung und Bremsdruckaufbau erfolgt, wird in der Rückfallebene diese Entkopplung aufgehoben, so dass der Fahrer direkt Bremsmittel in die Bremskreise verschieben kann. In die Rückfallebene wird z.B. übergegangen, wenn mit Hilfe der Druckbereitstellungseinrichtung kein Druckaufbau mehr möglich ist. Dies ist u.a. dann der Fall, wenn zur Ansteuerung der Druckbereitstellungseinheit relevante Sensorik ausfällt bzw. wenn durch die Sensorik z.B. der Bremsdruck oder der Kolbenweg als nicht mehr zuverlässig erkannt wurde.

Die Druckbereitstellungseinrichtung in oben beschriebenen Bremssystemen wird auch als Aktuator bzw. hydraulischer Aktuator bezeichnet. Insbesondere werden Aktuatoren als Linearaktuatoren bzw. Lineareinheiten ausgebildet, bei denen zum Druckaufbau ein Kolben axial in einen hydraulischen Druckraum verschoben wird.

Konventionelle Bremssysteme bestehen überwiegend aus einer Betätigungseinheit mit einem Unterdruck-Bremskraftverstärker, einem hydraulischen Tandem-Hauptbremszylinder und einer nachgeschalteten elektronisch geregelten Modulatoreinheit für fahrdynamische Regelfunktionen. Eine zentrale elektronische Steuer- und Regeleinheit (ECU) verarbeitet diverse Sensorsignale und Befehle, die von im Fahrzeug verbauten Sensoren oder weiteren ECUs herrühren können.

Die Betätigungseinheit kann bei einem gehobenen Funktionalitätsniveau auch ohne den Fahrer eine Bremsung einleiten, wie zum Beispiel bei einem Aktivbooster. Der Bremskraftverstärker kann elektrohydraulisch oder elektromechanisch ausgeführt sein. Im Wesentlichen bestehen aktuelle Bremssysteme aus getrennten Modulen für Druckerzeugung und Regelfunktionen. Diese können in einem oder mehreren Gehäusen im Fahrzeug untergebracht sein.

Ein elektrohydraulisches Bremssystem sowie ein Verfahren zum Betreiben eines elektrohydraulischen Bremssystems gemäß dem Oberbegriff des unabhängigen Anspruchs 1 bzw. 10 ist aus der DE 10 2012 201820 A1 bekannt.

Aus der DE 600 30 271 T2 ist bekannt, in der hydraulischen Rückfallebene einer By-Wire-Bremsanlage bei Ausfall der elektrischen Bremsbetriebsart bei einem Bremsvorgang zum Aufbau von zusätzlichem Bremsmoment die Parkbremse anzusteuern.

Nachteilig dabei ist, dass die Parkbremse für derartige Anwendungen nicht ausgelegt ist und somit überlastet werden und Schaden nehmen kann.

Der Erfindung liegt daher die Aufgabe zugrunde, ein derartiges Bremssystem dahingehend zu verbessern, dass der Fahrer bei der Gewöhnung an die Rückfallebene unterstützt wird, gleichzeitig aber die Parkbremse geschützt wird. Weiterhin soll ein Verfahren zum Betreiben eines Bremssystems bzw. einer Bremsanlage bereitgestellt werden.

In Bezug auf das Bremssystem wird diese Aufgabe erfindungsgemäß dadurch gelöst, dass in der Rückfallebene die Steuer- und Regeleinheit den Bremspedalweg überwacht und bei Erreichen eines vorgegebenen Pedalwegschwellenwertes den Zusatzbremsaktuator zum Aufbau von Bremsmoment ansteuert, und wobei bei einer Abfolge von Bremspedalbetätigungen durch den Fahrer der Pedalwegschwellenwert wenigstens einmal erhöht wird.

Vorteilhafte Ausgestaltungen der Erfindung sind Gegenstand der Unteransprüche.

Die Erfindung geht von der Überlegung aus, dass der Einsatz eines Zusatzbremsaktuators, insbesondere der Parkbremse, in einer hydraulischen Rückfallebene sinnvoll ist. In der Rückfallebene muss der Fahrer durch Muskelkraft den Bremsdruck aufbauen und längere Bremspedalwege in Kauf nehmen. Durch die Ansteuerung des Zusatzbremsaktuators, vorteilhafterweise der Parkbremse, wird zusätzlich Bremsmoment für das Kraftfahrzeug aufgebaut, so dass der Fahrer nicht den falschen Eindruck erhält, dass aufgrund der veränderten Bremscharakteristik das Fahrzeug überhaupt nicht mehr gebremst werden kann, bzw. dass ein Totalausfall des Bremssystems vorliegt. Zusätzlich dazu wird durch den zusätzlichen Bremsmomentanteil das Fahrzeug auch stärker gebremst.

Allerdings sollte der Zusatzbremsaktuator, insbesondere wenn er als Parkbremse ausgebildet ist, geschützt werden, da sie für Betriebsbremsvorgänge nicht ausgelegt ist und bei zu intensiver Benutzung Schaden nehmen kann und ihre Funktion teilweise oder vollständig einstellen kann.

Wie nunmehr erkannt wurde, können eine Unterstützung des Fahrers und gleichzeitige Schonung des Zusatzbremsaktuators erreicht werden, indem bei einer Sequenz von Bremspedalbetätigungen die Aktivierung des Zusatzbremsaktuators sukzessive zu längeren Bremspedalwegen verschoben wird. Der Fahrer erfährt dadurch zunächst, dass er das Fahrzeug noch bremsen kann. Aufgrund der immer länger werdenden Bremspedalwege lernt der Fahrer darüber hinaus, dass er immer weitere Bremspedalwege zurücklegen muss, so dass er an die neue Situation der Rückfallebene gewöhnt wird.

Die durch den Hauptbremszylinder oder die Druckbereitstellungseinrichtung betätigbaren Radbremsen sind bevorzugt Teil der Betriebsbremse. Bei nicht aktivierter oder nicht aktivierbarer Druckbereitstellungseinrichtung in der hydraulischen Rückfallebene erhält der Fahrer über den Hauptbremszylinder Durchgriff auf die Radbremsen.

Vorteilhafterweise wird bei einer Abfolge von Bremspedalbetätigungen der Pedalwegschwellenwert zu immer höheren Bremspedalwegen verschoben. Der Fahrer muss das Bremspedal also immer weiter treten, bis das zusätzliche Bremsmoment vom Zusatzbremsaktuator appliziert wird. Dadurch lernt er, dass der zusätzliche bremsende Effekt immer später und irgendwann voraussichtlich gar nicht mehr eintritt.

Die Abfolge der erhöhten Bremspedalwege weist vorzugsweise im Wesentlichen gleiche Pedalwegabstände auf. Diese Regelmäßigkeit und damit Vorhersehbarkeit vermittelt dem Fahrer Zuverlässigkeit und Sicherheit bei dem Erlernen des neuen Bremsverhaltens.

Nach einer vorgegebenen applizierbaren maximalen Anzahl von aufeinanderfolgenden Ansteuerungen wird vorzugsweise der Zusatzbremsaktuator nicht mehr angesteuert. Der Fahrer hat mittlerweile gelernt, dass er nur übergangsweise eine Unterstützung erfährt und hat sich an die langen Bremspedalwege und das kräftige Betätigen des Bremspedals gewöhnt. Der Zusatzbremsaktuator wird dann geschont und vor Überlastung bzw. Beschädigung geschützt. Die Anzahl der aufeinanderfolgenden Ansteuerungen liegt bevorzugt zwischen 30 und 50.

Die Stärke des von dem Zusatzaktuator erzeugten Bremsmomentes ist im Wesentlichen gleich. Das heißt, das vom Zusatzbremsaktuator aufgebaute Bremsmoment ist bei jeder Ansteuerung im Wesentlichen gleich groß.

Der Zusatzbremsaktuator ist bevorzugt als Parkbremse ausgebildet. Die Parkbremse erfüllt in diesem Fall eine Doppelfunktion: Einerseits wird sie beim Abstellen des Fahrzeuges angesteuert um das Fahrzeug zu halten bzw. zu sichern. Andererseits dient sie als Bremshilfe in der Rückfallebene und signalisiert dem Fahrer, dass das Fahrzeug trotz veränderter Bremscharakteristik noch gebremst werden kann.

Es ist bevorzugt, dass in der Normalbetriebsart die Steuer- und Regeleinheit aufgrund der Betätigung des Bremspedals durch den Fahrer einen Bremswunsch erfasst und die Druckbereitstellungseinrichtung zum Aufbau von Bremsmoment an den Radbremsen der Betriebsbremse ansteuert, wobei bei nicht aktivierter oder nicht aktivierbarer Druckbereitstellungseinrichtung in der hydraulischen Rückfallebene der Fahrer über den Hauptbremszylinder Durchgriff auf die Radbremsen erhält und die Steuer- und Regeleinheit den Zusatzbremsaktuator der Parkbremse zum Aufbau von Bremsmoment ansteuert.

Die Parkbremse ist vorteilhafterweise elektromechanisch ausgeführt. Hierbei können verschieden Bauformen der elektromechanischen Parkbremse, z.B. Bremsseilzieher, Duo-Servo Aktuatoren, integrierter Bremssattelaktuatoren, reine Parkbremssattel verwendet werden. Die Bremsenart, z.B. Scheiben- und Trommelbremse oder das Wirkprinzip, z.B. Simplex, Duo-Servo oder Kombibremssattel haben hierbei keine Relevanz.

Als elektronisch ansteuerbarer Zusatzbremsaktuator können viele weitere Systeme zum Einsatz kommen, sofern sie geeignet sind den Fahrerbremswunsch zu unterstützen, z.B. Wirbelstrombremsen, Strömungsbremsen, Retarder, E-Antriebsmotorenbeeinflussung.

Die elektronisch ansteuerbare Parkbremse ist bevorzugt an der Hinterachse angeordnet und umfasst mindestens einen Aktuator. Dies kann beispielsweise ausgeführt sein mit einem Einseil-Bremsseilzieher, der auf beide Parkbremssättel wirkt analog dem Handbremshebel.

In Bezug auf das Verfahren wird die oben genannte Aufgabe erfindungsgemäß dadurch gelöst, dass in der Rückfallebene der Bremspedalweg überwacht wird und bei Erreichen eines vorgegebenen Pedalwegschwellenwertes der Zusatzbremsaktuator zum Aufbau von Bremsmoment angesteuert wird, und wobei bei einer Abfolge von Bremspedalbetätigungen durch den Fahrer der Pedalwegschwellenwert wenigstens einmal erhöht wird.

Die Vorteile der Erfindung liegen insbesondere darin, dass durch eine Veränderung des Ansteuerpunktes des Zusatzaktuators in Abhängigkeit von dem Bremspedalweg dem Fahrer einerseits signalisiert wird, dass das Fahrzeug in der Rückfallebene noch gebremst werden kann und andererseits auch signalisiert wird, dass sich die notwendigen Bremspedalwege verändert haben und er größere Bremspedalwege zurücklegen muss. Insbesondere wenn in einer Sequenz von Bremspedalbetätigungen die Ansteuerung des Zusatzbremsaktuators zu immer weiteren Bremspedalwegen verschoben wird, lernt der Fahrer, dass für ein gleichgroßes Bremsmoment immer größer werdende Bremspedalwege notwendig werden. Eine gleichmäßige Vergrößerung des notwendigen Bremspedalweges vermittelt dem Fahrer eine Berechenbarkeit und Funktionstüchtigkeit der Bremsanlage, so dass er sich optimiert auf die neue Situation in der Rückfallebene einstellen kann. Wenn als Zusatzaktuator eine Parkbremse zum Einsatz kommt muss darüber hinaus kein weiterer Aktuator eingesetzt werden.

Ein Ausführungsbeispiel der Erfindung wird anhand einer Zeichnung näher erläutert. Darin zeigen in stark schematisierter Darstellung:
- FIG. 1: ein hydraulisches Schaltbild eines elektrohydraulischen Bremssystems in einer bevorzugten Ausführungsform;
- FIG. 2: ein beispielhaftes Diagramm von Bremsmoment als Funktion der aufgewendeten Pedalkraft in verschiedenen Bremsszenarien;
- FIG. 3: ein beispielhaftes Diagramm von Bremsmoment als Funktion des aufgebrachten Bremspedalwegs in verschiedenen Bremsszenarien; und
- FIG. 4: ein beispielhaftes Diagramm von Bremsmoment als Funktion des zurückgelegten Bremspedalwegs in verschiedenen Bremsszenarien bei einer Sequenz von Bremspedalbetätigungen.

Gleiche Teile sind in allen Figuren mit denselben Bezugszeichen versehen.

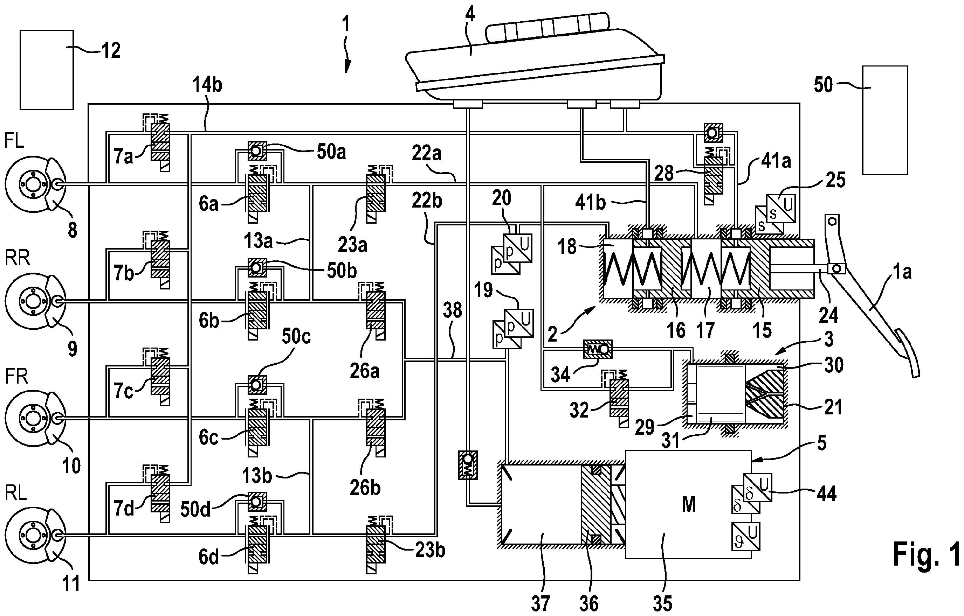

In FIG. 1 ist ein bevorzugtes Ausführungsbeispiel eines erfindungsgemäßen elektrohydraulischen Bremssystems 1 bzw. einer Bremsanlage dargestellt. Das Bremssystem 1 umfasst einen mittels eines Betätigungs- bzw. Bremspedals 1a betätigbaren Hauptbremszylinder 2, eine mit dem Hauptbremszylinder 2 zusammen wirkende Simulationseinrichtung 3, einen dem Hauptbremszylinder 2 zugeordneten, unter Atmosphärendruck stehenden Druckmittelvorratsbehälter 4, eine elektrisch steuerbare Druckbereitstellungseinrichtung 5, welche durch eine Zylinder-Kolben-Anordnung mit einem hydraulischen Druckraum 37 gebildet wird, deren Kolben 36 durch einen elektromechanischen Aktuator umfassend einen Motor 35 und ein Rotations-Translationsgetriebe verschiebbar ist, eine elektrisch steuerbare Druckmodulationseinrichtung zum Einstellen radindividueller Bremsdrücke und eine elektronische Steuer- und Regeleinheit 12.

Die nicht näher bezeichnete Druckmodulationseinrichtung umfasst beispielsgemäß je hydraulisch betätigbarer Radbremse 8, 9, 10 , 11 eines nicht dargestellten Kraftfahrzeuges ein Einlassventil 6a-6d und ein Auslassventil 7a-7d, die paarweise über Mittenanschlüsse hydraulisch zusammengeschaltet und an die Radbremsen 8, 9, 10, 11 angeschlossen sind. Die Eingangsanschlüsse der Einlassventile 6a-6d werden mittels Bremskreisversorgungsleitungen 13a, 13b mit Drücken versorgt, die in einer "Brake-by-Wire"-Betriebsart aus einem Systemdruck abgeleitet werden, der in einer an den Druckraum 37 der Druckbereitstellungseinrichtung 5 angeschlossenen Systemdruckleitung 38 vorliegt.

Den Einlassventilen 6a-6d ist jeweils ein zu den Bremskreisversorgungsleitungen 13a, 13b hin öffnendes Rückschlagventil 50a-50d parallel geschaltet. In einer Rückfallbetriebsart werden die Bremskreisversorgungsleitungen 13a, 13b über hydraulische Leitungen 22a, 22b mit den Drücken von Druckräumen 17, 18 des Hauptbremszylinders 2 beaufschlagt. Die Ausgangsanschlüsse der Auslassventile 7a-7d sind über eine Rücklaufleitung 14b mit dem Druckmittelvorratsbehälter 4 verbunden.

Der Hauptbremszylinder 2 weist zwei hintereinander angeordnete Kolben 15, 16 auf, die die hydraulischen Druckräume 17, 18 begrenzen. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 4 in Verbindung, wobei die Verbindungen durch eine Relativbewegung der Kolben 17, 18 absperrbar sind. Die Druckräume 17, 18 stehen andererseits mittels der hydraulischen Leitungen 22a, 22b mit den bereits genannten Bremskreisversorgungsleitungen 13a, 13b in Verbindung.

In der Druckausgleichsleitung 41a ist ein stromlos offenes Ventil 28 enthalten. Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals 1a infolge einer Pedalbetätigung mit der Translationsbewegung des ersten Hauptbremszylinderkolbens 15, dessen Betätigungsweg von einem, vorzugsweise redundant ausgeführten, Wegsensor 25 erfasst wird. Dadurch ist das entsprechende Kolbenwegsignal ein Maß für den Bremspedalbetätigungswinkel. Es repräsentiert einen Bremswunsch des Fahrzeugführers.

In den an die Druckräume 17, 18 angeschlossenen Leitungsabschnitten 22a, 22b ist je ein Trennventil 23a, 23b angeordnet, welches als ein elektrisch betätigbares, vorzugsweise stromlos offenes, 2/2-Wegeventil ausgebildet ist. Durch die Trennventile 23a, 23b kann die hydraulische Verbindung zwischen den Druckräumen 17, 18 des Hauptbremszylinders und den Bremskreisversorgungsleitungen 13a, 13b abgesperrt werden. Ein an den Leitungsabschnitt 22b angeschlossener, redundant ausgeführter Drucksensor 20 erfasst den im Druckraum 18 durch ein Verschieben des zweiten Kolbens 16 aufgebauten Druck.

Die Simulationseinrichtung 3 ist hydraulisch an den Hauptbremszylinder 2 ankoppelbar und besteht beispielsgemäß im Wesentlichen aus einer Simulatorkammer 29, einer Simulatorfederkammer 30 sowie einem die beiden Kammern 29, 30 voneinander trennenden Simulatorkolben 31. Der Simulatorkolben 31 stützt sich durch ein in der Simulatorfederkammer 30 angeordnetes elastisches Element (z. B. eine Feder), welches vorteilhafterweise vorgespannt ist, am Gehäuse 21 ab. Die Simulatorkammer 29 ist mittels eines elektrisch betätigbaren Simulatorventils 32 mit dem ersten Druckraum 17 des Hauptbremszylinders 2 verbindbar.

Bei Vorgabe einer Pedalkraft und geöffnetem Simulatorventil 32 strömt Druckmittel vom Hauptbremszylinder-Druckraum 17 in die Simulatorkammer 29. Ein hydraulisch antiparallel zum Simulatorventil 32 angeordnetes Rückschlagventil 34 ermöglicht unabhängig vom Schaltzustand des Simulatorventils 32 ein weitgehend ungehindertes Zurückströmen des Druckmittels von der Simulatorkammer 29 zum Hauptbremszylinder-Druckraum 17. Andere Ausführungen und Anbindungen der Simulationseinrichtung an den Hauptbremszylinder 2 sind denkbar.

Die elektrisch steuerbare Druckbereitstellungseinrichtung 5 ist als eine hydraulische Zylinder-Kolben-Anordnung bzw. ein einkreisiger elektrohydraulischer Aktuator ausgebildet, deren/dessen Druckkolben 36, welcher den Druckraum 37 begrenzt, von einem schematisch angedeuteten Elektromotor 35 unter Zwischenschaltung eines ebenfalls schematisch dargestellten Rotations-Translationsgetriebes betätigbar ist. Ein der Erfassung der Rotorlage des Elektromotors 35 dienender, lediglich schematisch angedeuteter Rotorlagensensor ist mit dem Bezugszeichen 44 bezeichnet. Zusätzlich kann auch ein Temperatursensor zum Sensieren der Temperatur der Motorwicklung verwendet werden.

Der durch die Kraftwirkung des Kolbens 36 auf das in dem Druckraum 37 eingeschlossene Druckmittel erzeugte Aktuatordruck wird in die Systemdruckleitung 38 eingespeist und mit einem vorzugsweise redundant ausgeführten Drucksensor 19 erfasst. Bei geöffneten Zuschaltventilen 26a, 26b gelangt das Druckmittel in die Radbremsen 8, 9, 10, 11 zu deren Betätigung. Durch Vor- und Zurückschieben des Kolbens 36 erfolgt so bei geöffneten Zuschaltventilen 26a, 26b bei einer Normalbremsung in der "Brake-by-Wire"-Betriebsart ein Radbremsdruckaufbau und -abbau für alle Radbremsen 8, 9, 10, 11.

Beim Druckabbau strömt dabei das vorher aus dem Druckraum 37 in die Radbremsen 8, 9, 10, 11 verschobene Druckmittel auf dem gleichen Wege wieder in den Druckraum 37 zurück. Dagegen strömt bei einer Bremsung mit radindividuell unterschiedlichen, mit Hilfe der Einlass- und Auslassventile 6a-6d, 7a-7d geregelten Radbremsdrücken (z. B. bei einer Antiblockierregelung (ABS-Regelung)) der über die Auslassventile 7a-7d abgelassene Druckmittelanteil in den Druckmittelvorratsbehälter 4 und steht somit zunächst der Druckbereitstellungseinrichtung 5 zur Betätigung der Radbremsen 8, 9, 10, 11 nicht mehr zur Verfügung. Ein Nachsaugen von Druckmittel in den Druckraum 37 ist durch ein Zurückfahren des Kolbens 36 bei geschlossenen Zuschaltventilen 26a, 26b möglich.

Die Bremsanlage 1 weist beispielsgemäß eine elektromechanisch ausgebildete Parkbremse 50 auf, die ein zusätzlicher Bremsaktuator ist. Die Parkbremse 50 ist als elektromechanische Bremse ausgebildet und an der Hinterachse des Fahrzeuges angebracht. Beim Abstellen des Fahrzeuges wird sie von der Steuer- und Regeleinheit 12 angesteuert zum Aufbau von Bremsmoment zum Halten des Fahrzeuges.

In der Normalbetriebsart "Brake-by-Wire" des Bremssystems 1 erfasst die Steuer- und Regeleinheit 12 mittels des Pedalwegsensors 25, der den zurückgelegten Bremspedalweg erfasst, den Bremswunsch des Fahrers. Daraus werden ein Sollbremsmoment bzw. zugehörige in den Radbremsen 8, 9, 10, 11 einzustellende Bremsdrücke ermittelt. Die Steuer- und Regeleinheit 12 steuert zum Druckaufbau die Druckbereitstellungseinrichtung 5 an.

In einer hydraulischen Rückfallebene, in die geschaltet bzw. übergegangen wird, wenn die Druckbereitstellungseinrichtung 5 nicht mehr ausreichend Bremsdruck in den Radbremsen 8, 9, 10, 11 aufbauen kann, wird die Druckbereitstellungseinrichtung 5 durch Schließen der Zuschaltventile 26a, 26b hydraulisch von den Radbremsen 8, 9, 10, 11 getrennt. Damit dies auch bei einem Bordnetzausfall erfolgen kann, sind die Zuschaltventile 26a, 26b vorteilhafterweise stromlos geschlossen ausgeführt. Die vorteilhafterweise stromlos offen ausgeführten Trennventile 23a, 23b öffnen bzw. werden geöffnet, so dass der Fahrer durch Betätigung des Hauptbremszylinders 2 durch Muskelkraft Bremsflüssigkeit in die Radbremsen 8, 9, 10, 11 verschieben kann.

Beim Übergang von der Normalbetriebsart "By-Wire" in die hydraulische Rückfallebene verändern sich die Bremseigenschaften des Bremssystems 1 deutlich. Die Bremspedalcharakteristik verändert sich dabei von "kurz und stark" zu "lang und weich" . Bremsmoment kann nur noch direkt durch Muskelkraft vom Fahrer aufgebaut werden. Bei Betätigung des Bremspedals wird durch die Verschiebung der Kolben 15, 16 des Hauptbremszylinders Bremsflüssigkeit in wenigstens eine Radbremse 8, 9, 10, 11 verschoben. Der Fahrer muss dazu das Bremspedal 1a stärker treten als im By-Wire-Modus und auch längere Bremspedalwege zurücklegen, um das gleiche Bremsmoment zu erzielen wie im By-Wire-Modus.

Damit der Fahrer in der Rückfallebene aufgrund größeren Bremspedalweges und schwächerer Bremskraft nicht irrtümlich denkt, dass das Bremssystem keine Bremskraft mehr erzeugen kann bzw. dass ein Totalausfall vorliegt, steuert die Steuer- und Regeleinheit 12 beispielsgemäß die Parkbremse 50 zum Aufbau von Bremsmoment an. Das Fahrzeug bremst also stärker, als es nur bei durch Muskelkraft des Fahrers erzeugtem Bremsmoment bremsen würde.

Das Bremssystem 1 ist somit dazu ertüchtigt, auf diese Weise den Fahrer in der Rückfallebene zu unterstützen. Gleichzeitig wird aber die Parkbremse vor Überbelastung geschützt, da diese für dauerhaftes Bremsen nicht ausgelegt ist.

Dazu variiert die Steuer- und Regeleinheit 12 bei aufeinanderfolgenden Bremspedalbetätigungen den Pedalwegschwellenwert, bei dem die Parkbremse angesteuert wird. Diese Variation erfolgt in der bevorzugten Ausführung derart, dass der Pedalwegschwellenwert bei aufeinanderfolgenden Bremspedalbetätigungen größer gewählt wird. Das Bremsmoment der Parkbremse 50 wird also bei immer längeren Bremspedalwegen aufgebaut. Das maximale von der Parkbremse 50 aufgebaute Bremsmoment wird dabei nicht variiert. Das von der Parkbremse 50 jeweils aufgebrachte Bremsmoment beträgt auf Hochreibwert vorliegend zwischen 0.25 und 0.4g, wobei der konkrete Wert von der momentanen bzw. dynamischen Achslastverteilung und der Fahrbahnbeschaffenheit abhängt.

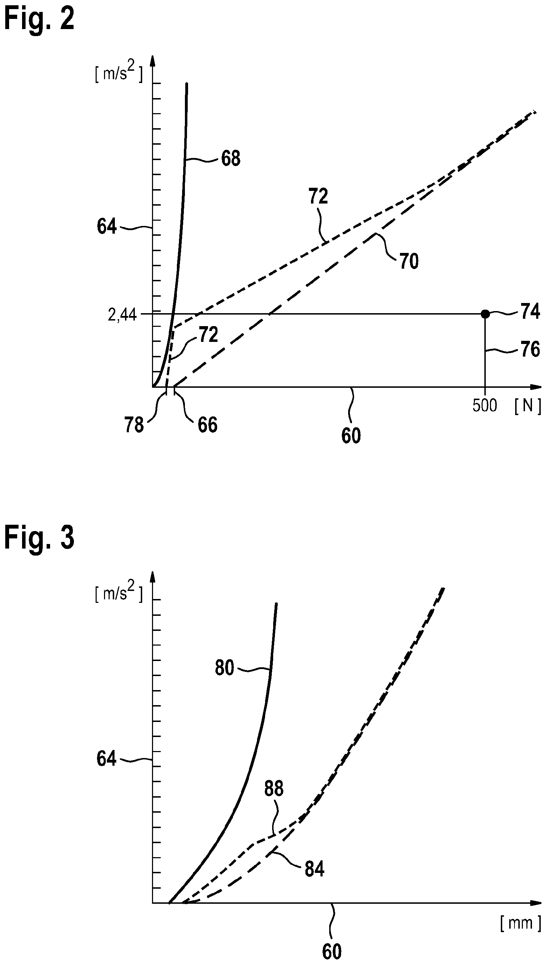

Im Folgenden wird anhand der in den FIG. 2, 3 und 4 gezeigten Diagramme erläutert, wie beispielsgemäß die Parkbremse 50 angesteuert wird und welche Auswirkungen ihre Ansteuerung auf den Bremsvorgang des Fahrzeuges hat.

In FIG. 2 ist beispielsgemäß ein Diagramm dargestellt, in dem auf einer x-Achse 60 die Pedalkraft in der Einheit N (Newton) und auf einer y-Achse 64 die Fahrzeugverzögerung in der Einheit m/s² dargestellt ist. Eine erste Kurve 68 zeigt dabei die Verzögerung des Fahrzeuges in der Normalbetriebsart "By-Wire". Eine zweite Kurve 70 zeigt die Fahrzeugverzögerung in der gewöhnlichen hydraulischen Rückfallebene, in der der Fahrer (allein) durch Muskelkraft Bremsmoment aufbaut. Die Kurve 70 ist dementsprechend deutlich flacher als die Kurve 68. Sie überschreitet die Nulllinie nach einem Pedalkraftschwellenwert 66 und steigt danach im Wesentlichen linear an.

Eine dritte Kurve 72 zeigt die Fahrzeugverzögerung in der hydraulischen Rückfallebene, wobei zusätzlich die Parkbremse aktiviert wird. Die Kurve 72 steigt dabei nach einem Pedalkraftschwellenwert 78 steil linear an, um dann abzuknicken und linear weiter zu steigen. Dabei ist erkennbar, dass bei Aktivierung der Parkbremse die Fahrzeugverzögerung sehr schnell ansteigt, um dann abzuflachen mit einer Steigung, die geringer ist als bei der normalen Rückfallebene. Durch den schnellen Anstieg wird der Fahrer ermutigt, weiter zu bremsen, da das Fahrzeug auf seinen Bremswunsch schnell und deutlich reagiert. Die Bezugszeichen 74 und 76 beschreiben die gesetzliche Mindestanforderung, nach der mit einer Pedalkraft von 500N eine Mindestverzögerung des Fahrzeuges von 2,44 m/s² erreicht werden muss.

In der FIG. 3 ist auf der x-Achse 60 der Bremspedalweg in mm aufgetragen; auf der y-Achse 64 ist wieder die Fahrzeugverzögerung in m/s² aufgetragen. Kurve 80 zeigt das Verzögerungsverhalten in der ("By-wire") Normalbetriebsart, während Kurve 84 das Verzögerungsverhalten in der Rückfallebene darstellt. In Abhängigkeit vom Bremspedalweg setzt in der Rückfallebene die Verzögerung später, also bei größerem Bremspedalweg, ein, wodurch der Fahrer verunsichert werden kann. Kurve 88 zeigt die Fahrzeugverzögerung mit zusätzlich aktivierter Parkbremse. Die Fahrzeugverzögerung setzt im Vergleich zur normalen Rückfallebene schon bei kleineren Bremspedalwegen ein und steigt zunächst stärker an, so dass der Fahrer erkennen kann, dass sich das Fahrzeug - auch bei verändertem Pedalgefühl - noch abbremsen lässt.

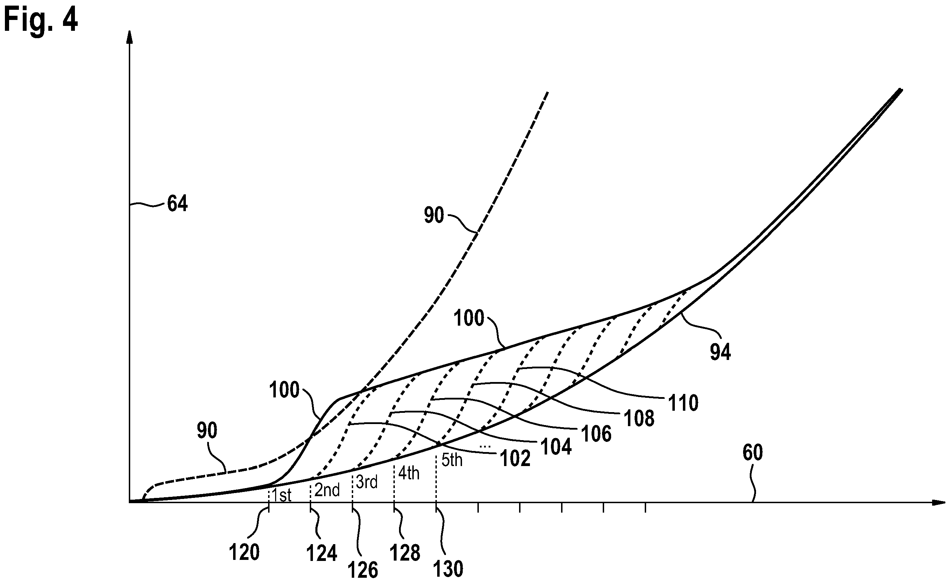

Wenn in der hydraulischen Rückfallebene bei jeder Pedalbetätigung die Parkbremse gleichermaßen aktiviert wird, kann dies zu ihrer Beschädigung bzw. Funktionsbeeinträchtigung führen. Beispielsgemäß wird daher ihr Ansteuerpunkt bei einer Sequenz von Bremspedalbetätigungen variiert, wie dies in FIG. 4 dargestellt ist. Die x-Achse 60 zeigt hierbei wiederum den Bremspedalweg, und die y-Achse 64 zeigt die Fahrzeugverzögerung.

Kurve 90 zeigt die Fahrzeugverzögerung in der Normalbetriebsart des Bremssystems, in dem der Bremswunsch des Fahrers erfasst wird, woraus ein Bremssollmoment bestimmt wird. Die Druckbereitstellungseinrichtung 5 wird von der Steuer- und Regeleinheit 12 entsprechend angesteuert um den für das Bremsmoment erforderlichen Bremsdruck in den Radbremsen 8, 9, 10, 11 aufzubauen.

Kurve 94 zeigt die Fahrzeugverzögerung in der hydraulischen Rückfallebene (ohne Ansteuerung des Zusatzbremsaktuators). Kurve 94 steigt deutlich geringer an als Kurve 90, was bedeutet, dass der Fahrer um eine gleiche Verzögerung wie im Normalbetriebsmodus zu erreichen das Pedal deutlich weiter treten muss.

Die Kurven 100, 102, 104, 106, 108, 110 zeigen jeweils die Fahrzeugverzögerungen bei einer Sequenz von Bremspedalbetätigungen durch den Fahrer. Bei der ersten Betätigung des Bremspedals in dieser Sequenz, was durch Kurve 100 symbolisiert ist, wird die Parkbremse bei Erreichen eines ersten Pedalwegschwellenwertes 120 aktiviert bzw. angesteuert. Bei einer zweiten Pedalbetätigung, der insbesondere ein vorheriges Lösen des Bremspedals vorausging, wird die Parkbremse bei einem zweiten, höheren Pedalwegschwellenwert 124 aktiviert bzw. angesteuert.

Die Unterstützung durch den Zusatzbremsaktuator wird bevorzugt durch einen applizierbaren Wegschwellenwert "Fahrer bremst" des Bremspedales (veränderlicher Pedalwegschwellenwert) aktiviert. Wird dieser unterschritten, wird die Unterstützung weggenommen.

Zusätzlich zu der Aktivierung über den Pedalwegschwellenwert wird bevorzugt eine Abschaltung überlagert, die die Aktivierung des Zusatzbremsaktuators zu- oder abschaltet in Abhängigkeit der Fahrzeugverzögerung. Besonders bevorzugt wird bei Überschreitung eines oberen Grenzwertes der Fahrzeugverzögerung die Unterstützung zurückgenommen, bei der Unterschreitung eines unteren Grenzwertes wird die Unterstützung wieder zugeschaltet, solange der Wegschwellwert über "Fahrer bremst" liegt.

Bevorzugt wird der Zusatzbremsaktuator bzw. die Parkbremse aktiviert, wenn der Bremspedalweg größer als der (gerade aktuelle) Pedalwegschwellenwert ist und die Fahrzeugverzögerung kleiner einem Maximalwert (z.B. unterem Grenzwert) ist.

Darauf folgende Pedalbetätigungen führen zu einer Aktivierung der Parkbremse bei jeweils höheren Pedalwegschwellenwerten 124, 126, 128, 130 usw. Der Fahrer muss also das Bremspedal immer weiter treten, bis das zusätzliche Bremsmoment von der Parkbremse aufgebaut wird. Der Fahrer erfährt bzw. lernt auf diese Weise, dass der verstärkende Bremseffekt nur als anfängliche Unterstützung diente und er sich darauf einstellen muss, dass diese Unterstützung bei weiteren Bremsvorgängen verschwinden wird. Der Fahrer wird durch die immer später einsetzende Verstärkung auch zu immer weiteren Bremspedalwegen geführt und gewöhnt sich auf diese Weise an die nun länger ausfallenden Bremspedalwege. Er wird somit gewissermaßen auf die neue Bremssituation konditioniert.

## Patentansprüche

1. Elektrohydraulisches Bremssystem (1) für ein Kraftfahrzeug, umfassend
• einen durch ein Bremspedal (la) betätigbaren Hauptbremszylinder (2) zur Betätigung von Radbremsen (8, 9, 10, 11),
• eine elektronisch ansteuerbare Druckbereitstellungseinrichtung (5),
• einen elektronisch ansteuerbaren Zusatzbremsaktuator (50),
• eine Steuer- und Regeleinheit (12),
wobei in einer Normalbetriebsart die Steuer- und Regeleinheit (12) aufgrund der Betätigung des Bremspedals (la) durch den Fahrer einen Bremswunsch erfasst und die Druckbereitstellungseinrichtung (5) zum Aufbau von Bremsmoment an den Radbremsen (8, 9, 10, 11) ansteuert, wobei bei nicht aktivierter oder nicht aktivierbarer Druckbereitstellungseinrichtung (5) in einer hydraulischen Rückfallebene der Fahrer Durchgriff auf die Radbremsen (8, 9, 10, 11) erhält und die Steuer- und Regeleinheit (12) den Zusatzbremsaktuator (50) zum Aufbau von Bremsmoment ansteuert, wobei in der Rückfallebene die Steuer- und Regeleinheit (12) den Bremspedalweg überwacht,
**dadurch gekennzeichnet, dass**
die Steuer- und Regeleinheit (12) bei Erreichen eines vorgegebenen Pedalwegschwellenwertes (120) den Zusatzbremsaktuator zum Aufbau von Bremsmoment ansteuert, und dass bei einer Abfolge von Bremspedalbetätigungen durch den Fahrer der Pedalwegschwellenwert (120) wenigstens einmal erhöht wird.

2. Bremssystem (1) nach Anspruch 1, wobei bei einer Abfolge von Bremspedalbetätigungen der Pedalwegschwellenwert (120) zu immer höheren Bremspedalwegen verschoben wird.

3. Bremssystem (1) nach Anspruch 2, wobei die Abfolge der erhöhten Bremspedalwege im Wesentlichen gleiche Pedalwegabstände aufweist.

4. Bremssystem (1) nach einem der Ansprüche 1 bis 3, wobei nach einer vorgegebenen maximalen Anzahl von aufeinanderfolgenden Ansteuerungen der Zusatzbremsaktuator (50) nicht mehr angesteuert wird.

5. Bremssystem (1) nach Anspruch 4, wobei die maximale Anzahl zwischen 30 und 50 beträgt.

6. Bremssystem (1) nach einem der Ansprüche 1 bis 5, wobei die Stärke des von dem Zusatzaktuator (50) erzeugten Bremsmomentes im Wesentlichen gleich ist.

7. Bremssystem (1) nach einem der Ansprüche 1 bis 6, wobei der Zusatzbremsaktuator (50) als Parkbremse ausgebildet ist.

8. Bremssystem (1) nach Anspruch 7, wobei die Parkbremse elektromechanisch ausgeführt ist.

9. Bremssystem (1) nach Anspruch 7 oder 8, wobei die Parkbremse an der Hinterachse des Kraftfahrzeugs angeordnet ist.

10. Verfahren zum Betreiben eines elektrohydraulischen Bremssystems (1) für ein Kraftfahrzeug, umfassend
• einen durch ein Bremspedal (1a) betätigbaren Hauptbremszylinder (2) zur Betätigung von Radbremsen (8, 9, 10, 11),
• eine elektronisch ansteuerbare Druckbereitstellungseinrichtung (5),
• einen elektronisch ansteuerbaren Zusatzbremsaktuator (50),
wobei in einer Normalbetriebsart aufgrund der Betätigung des Bremspedals (1a) durch den Fahrer ein Bremswunsch erfasst und die Druckbereitstellungseinrichtung (5) zum Aufbau von Bremsmoment an den Radbremsen (8, 9, 10, 11) angesteuert wird, wobei bei nicht aktivierter oder nicht aktivierbarer Druckbereitstellungseinrichtung (5) in einer hydraulischen Rückfallebene der Fahrer Durchgriff auf die Radbremsen (8, 9, 10, 11) erhält, und wobei in dieser Rückfallebene ein Zusatzbremsaktuator (50) zum Aufbau von Bremsmoment angesteuert wird,
wobei in der Rückfallebene der Bremspedalweg überwacht wird **dadurch gekennzeichnet dass** bei Erreichen eines vorgegebenen Pedalwegschwellenwertes (120) der Zusatzbremsaktuator (50) zum Aufbau von Bremsmoment angesteuert wird, und dass bei einer Abfolge von Bremspedalbetätigungen durch den Fahrer der Pedalwegschwellenwert (120) wenigstens einmal erhöht wird.

## Claims

1. Electrohydraulic brake system (1) for a motor vehicle, comprising
• a brake master cylinder (2), which can be actuated by a brake pedal (1a), for actuating wheel brakes (8, 9, 10, 11),
• a pressure generating device (5), which can be activated electronically,
• an additional brake actuator (50), which can be activated electronically,
• an open- and closed-loop control unit (12),
wherein, in a normal mode of operation, the open- and closed-loop control unit (12) detects a braking demand on the basis of the actuation of the brake pedal (1a) by the driver and activates the pressure generating device (5) to build up braking torque at the wheel brakes (8, 9, 10, 11), wherein, if the pressure generating device (5) is not activated or cannot be activated, the driver gains direct access to the wheel brakes (8, 9, 10, 11) and the open- and closed-loop control unit (12) activates the additional brake actuator (50) to build up braking torque in a hydraulic fallback level, wherein in the fallback level, the open- and closed-loop control unit (12) monitors the brake pedal travel
**characterized in that**
the open- and closed-loop control unit (12), when a predetermined pedal travel threshold value (120) is reached, activates the additional brake actuator to build up braking torque, and **in that**, in the event of a succession of brake pedal actuations by the driver, the pedal travel threshold value (120) is increased at least once.

2. Brake system (1) according to Claim 1, wherein, in the event of a succession of brake pedal actuations, the pedal travel threshold value (120) is shifted toward ever longer brake pedal travels.

3. Brake system (1) according to Claim 2, wherein the succession of increased brake pedal travels has substantially equal pedal travel intervals.

4. Brake system (1) according to one of Claims 1 to 3, wherein the additional brake actuator (50) is no longer activated after a predetermined maximum number of successive activations.

5. Brake system (1) according to Claim 4, wherein the maximum number is between 30 and 50.

6. Brake system (1) according to one of Claims 1 to 5, wherein the intensity of the braking torque generated by the additional actuator (50) is substantially equal.

7. Brake system (1) according to one of Claims 1 to 6, wherein the additional brake actuator (50) is designed as a parking brake.

8. Brake system (1) according to Claim 7, wherein the parking brake is of electromechanical design.

9. Brake system (1) according to Claim 7 or 8, wherein the parking brake is arranged on the rear axle of the motor vehicle.

10. Method for operating an electrohydraulic brake system (1) for a motor vehicle, comprising
• a brake master cylinder (2), which can be actuated by a brake pedal (1a), for actuating wheel brakes (8, 9, 10, 11),
• a pressure generating device (5), which can be activated electronically,
• an additional brake actuator (50), which can be activated electronically,
wherein, in a normal mode of operation, a braking demand is detected on the basis of the actuation of the brake pedal (1a) by the driver and the pressure generating device (5) is activated to build up braking torque at the wheel brakes (8, 9, 10, 11), wherein, if the pressure generating device (5) is not activated or cannot be activated, the driver gains direct access to the wheel brakes (8, 9, 10, 11) in a hydraulic fallback level, and wherein, in this fallback level, an additional brake actuator (50) is activated to build up braking torque, wherein in the fallback level, the brake pedal travel is monitored and,
**characterized in that**, when a predetermined pedal travel threshold value (120) is reached, the additional brake actuator (50) is activated to build up braking torque, and **in that**, in the event of a succession of brake pedal actuations by the driver, the pedal travel threshold value (120) is increased at least once.

## Revendications

1. Système de freinage (1) électrohydraulique pour un véhicule automobile, comprenant :
• un maître-cylindre de frein (2) actionnable par une pédale de frein (la) pour l'actionnement des freins de roue (8, 9, 10, 11) ;
• un dispositif de mise à disposition de pression (5) à commande électronique ;
• un actionneur de frein supplémentaire (50) à commande électronique ;
• une unité de commande et de réglage (12) ;
dans un mode de fonctionnement normal, l'unité de commande et de réglage (12) détectant une volonté de freinage du conducteur sur la base de l'actionnement de la pédale de frein (la) et commandant le dispositif de mise à disposition de pression (5) pour établir le couple de freinage au niveau des freins de roue (8, 9, 10, 11), sachant qu'en cas de dispositif de mise à disposition de pression (5) non activé ou non activable dans un plan de retour hydraulique, le conducteur obtient l'accès aux freins de roue (8, 9, 10, 11) et l'unité de commande et de réglage (12) commande l'actionneur de frein supplémentaire (50) pour établir le couple de freinage, l'unité de commande et de réglage (12) surveillant la course de pédale de frein ; **caractérisé en ce que** :
l'unité de commande et de réglage (12) commande, en cas de valeur seuil de course de pédale (120) prédéfinie atteinte, l'actionneur de frein supplémentaire pour établir le couple de freinage et qu'en cas de succession d'actionnements de pédale de frein par le conducteur, la valeur seuil de course de pédale (120) est au moins augmentée une fois.

2. Système de freinage (1) selon la revendication 1, en cas de succession d'actionnements de pédale de frein, la valeur seuil de course de pédale (120) étant repoussée vers des courses de pédale de frein toujours plus grandes.

3. Système de freinage (1) selon la revendication 2, la succession de courses de pédale de frein accrues comportant pour l'essentiel les mêmes distances de course de pédale.

4. Système de freinage (1) selon l'une quelconque des revendications 1 à 3, l'actionneur de frein supplémentaire (50) n'étant plus commandé après un nombre maximal prédéfini de commandes successives.

5. Système de freinage (1) selon la revendication 4, le nombre maximal étant compris entre 30 et 50.

6. Système de freinage (1) selon l'une quelconque des revendications 1 à 5, la puissance du couple de freinage produit par l'actionneur supplémentaire (50) étant pour l'essentiel identique.

7. Système de freinage (1) selon l'une quelconque des revendications 1 à 6, l'actionneur de frein supplémentaire (50) étant réalisé sous la forme d'un frein de stationnement.

8. Système de freinage (1) selon la revendication 7, le frein de stationnement étant réalisé de façon électromécanique.

9. Système de freinage (1) selon la revendication 7 ou 8, le frein de stationnement étant disposé au niveau de l'essieu arrière du véhicule automobile.

10. Procédé d'actionnement d'un système de freinage (1) électrohydraulique pour un véhicule automobile, comprenant :
• un maître-cylindre de frein (2) actionnable par une pédale de frein (la) pour l'actionnement des freins de roue (8, 9, 10, 11) ;
• un dispositif de mise à disposition de pression (5) à commande électronique ;
• un actionneur de frein supplémentaire (50) à commande électronique ;
dans un mode de fonctionnement normal, l'actionnement de la pédale de frein (la) par le conducteur détectant une volonté de freinage du conducteur et commandant le dispositif de mise à disposition de pression (5) pour établir le couple de freinage au niveau des freins de roue (8, 9, 10, 11), sachant qu'en cas de dispositif de mise à disposition de pression (5) non activé ou non activable dans un plan de retour hydraulique, le conducteur obtient l'accès aux freins de roue (8, 9, 10, 11) et l'actionneur de frein supplémentaire (50) est commandé pour établir le couple de freinage dans ce plan de retour hydraulique ;
dans le plan de retour hydraulique, la course de pédale de frein étant surveillée ;
**caractérisé en ce que** :
en cas de valeur seuil de course de pédale (120) prédéfinie atteinte, l'actionneur de frein supplémentaire (50) est commandé pour établir le couple de freinage et qu'en cas de succession d'actionnements de pédale de frein par le conducteur, la valeur seuil de course de pédale (120) est au moins augmentée une fois.
